Europäisches Patentamt

European Patent Office

Office européen des brevets

(19)

(11) Veröffentlichungsnummer: **0 226 540**
**B1**

(12) **EUROPÄISCHE PATENTSCHRIFT**

(45) Veröffentlichungstag der Patentschrift: **23.05.90**

(21) Anmeldenummer: **86810565.1**

(22) Anmeldetag: **05.12.86**

(51) Int. Cl.⁵: **B 30 B 15/00, A 22 C 7/00**

(54) **Presse zum Formen von Fleischwaren.**

(30) Priorität: **11.12.85 CH 5290/85**

(43) Veröffentlichungstag der Anmeldung:
**24.06.87 Patentblatt 87/26**

(45) Bekanntmachung des Hinweises auf die
Patenterteilung:
**23.05.90 Patentblatt 90/21**

(84) Benannte Vertragsstaaten:
**AT DE FR GB IT NL**

(56) Entgegenhaltungen:
**BE-A- 397 151
DE-A-2 107 205
DE-C- 547 236
DE-C- 897 515
US-A-2 608 253
US-A-2 880 668
US-A-3 901 140**

(73) Patentinhaber: **C. Hoegger Ingenieurbüro AG
Magdenauerstrasse 34
CH-9230 Flawil (CH)**

(72) Erfinder: **Hoegger, Cornel
Weideggstrasse 35
CH-9230 Flawil (CH)**

(74) Vertreter: **White, William et al
Isler AG Patentanwalts-Bureau Walchestrasse
23
CH-8006 Zürich (CH)**

EP 0 226 540 B1

**Beschreibung**

Die vorliegende Erfindung betrifft eine Presse zum Formen von Fleischwaren gemäss dem Oberbegriff des unabhängigen Patentanspruchs 1.

Pressen zum Formen von Fleischstücken sind bekannt. Dabei kann ein Höhenstempel neben Seiten- und Längenstempel vorgesehen sein. Während jedoch die Fleischstücke in Länge und Breite zugeschnitten werden können, so dass auch mit festen Formen gearbeitet werden kann, unterscheiden sie sich in der Höhe erheblich. Ein Speckstück kann bis auf wenige Zentimeter gepresst werden, während bei Schinken ein Mehrfaches dieser minimalen Höhe zu berücksichtigen ist. Zudem muss der Höhenstempel bis zu einem Abstand hochgefahren werden bei dem ein bequemes Einlegen des zu pressenden Stükkes möglich ist.

Bei industrieller Fleischverarbeitung hat sich gezeigt, dass mit konstanter Höhenverstellung des Höhenstempels, die unabhängig von der Dicke des Fleischstückes ist, viel Zeit verlorengeht, wenn wie üblich über längere Zeit hinweg ausschliesslich dünner Speck gepresst werden muss.

Es ist deshalb eine Aufgabe der Erfindung, eine Presse zu schaffen, mit der eine einfache Höhenverstellung des Höhenstempels ermöglicht ist.

Erfindungsgemäss wird dies durch die Merkmale im kennzeichnenden Teil des unabhängigen Patentanspruchs 1 erreicht.

Ein Ausführungsbeispiel wird nachfolgend an Hand der Zeichnung erläutert. Es zeigen.

Fig. 1 einen Aufriss einer Presse für Fleischwaren zum Teil geschnitten, und

Fig. 2 einen Grundriss der Presse nach Fig. 1.

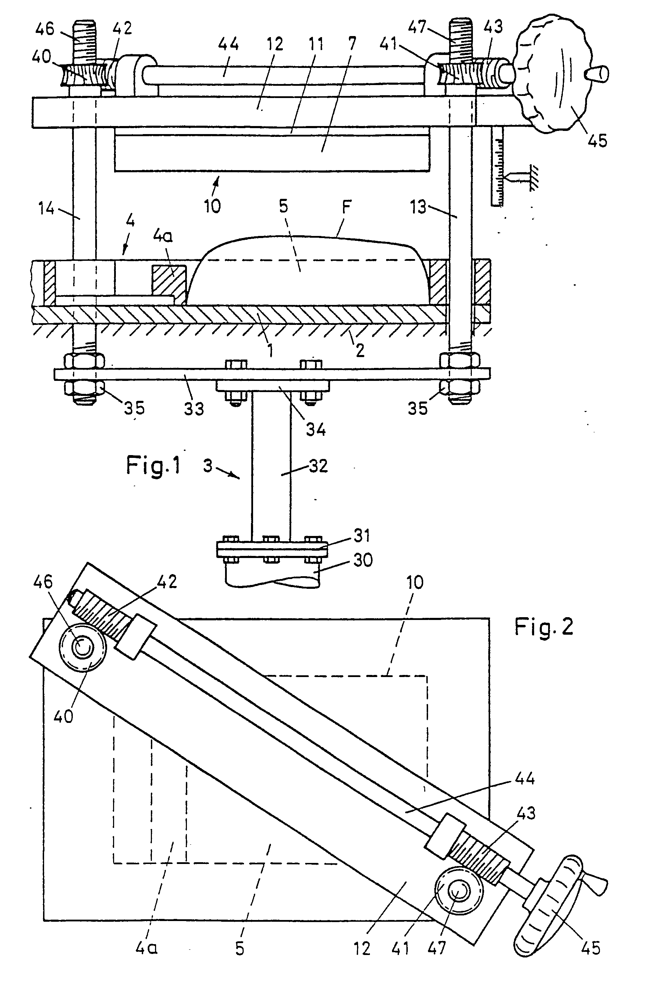

Die Presse umfasst eine Basisplatte 1 auf einem Maschinensockel 2 mit Antriebsmitteln 3 für das Anheben und Absenken des Höhenstempels l0. Auf der Basisplatte 1 ist die pressform 5 in nicht dargestellter Weise befestigt. Die Pressform 5 ist im Prinzip ein rechteckiges, oben offenes Gehäuse. Zwei der Seitenwände, z.B. die hintere und die rechts in Fig. 1 ersichtlichen Wände könnten verstellbar sein, um die Grösse der Form auf das Stück Fleisch F einzustellen.

Bei der rechten Seitenwand 4 ist dies durch einen Einsatz 4a, der auswechselbar befestigt ist, dargestellt. Ein solcher Einsatz 4a könnte auch gleichzeitig einen Anschlag für den Höhenstempel 10 sein.

Gemäss Fig. 1 ist der Höhenstempel 10 auf einer Pressplatte 11 montiert, die ihrerseits an einem Druckjoch 12 befestigt ist. Das Druckjoch 12 wird mittels zweier paralleler Bären 13, 14 von unten her für die Ausführung konstanter Hübe angetrieben. Wie in dieser Fig. 1 angedeutet umfasst der Antrieb 3 einen hydraulischen Zylinder 30 mit Zylinderdeckel 31 und eine durch diesen herausragende Kolbenstange 32. Die Kolbenstange 32 ist mit einem Antriebsjoch 33, beispielsweise durch eine Stösserplatte 34 und mehrere Schrauben starr verbunden.

Am Antriebsjoch 33 sind die beiden Bären 13, 14 befestigt, z.B. mittels Muttern 35. Bei einer derartigen Anordnung ist es offensichtlich, dass unterschiedliche Hübe der Bären 13, 14 nur sehr schwer einzustellen sind und eine genaue Einstellarbeit erfordern. Gemäss der Erfindung ist das Druckjoch 12 mit Pressplatte 11 und Höhenstempel 10 an den Bären 13, 14 höhenverstellbar befestigt.

Die beiden Bären 13, 14 sind an ihrem oberen Endteil mit je einem Gewinde 46, 47 versehen. Je eine drehbar am Druckjoch befestigte Spindelmutter 40, 41 erlaubt mit dem Gewinde 46, 47 zusammen eine Höhenverstellung des Druckjoches 12.

Zur Vereinfachung der Arbeitsweise können die beiden Spindelmuttern 40, 41 als Schneckenräder ausgebildet sein. Zwei entsprechende Zylinderschnecken 42, 43, die auf einer gemeinsamen Welle 44 starr befestigt sind können mittels eines Handrades 45 gedreht werden, so dass die beiden Spindelmuttern 40, 41 gleicherweise rotiert werden und damit das Druckjoch 12 bezüglich der Lage zu den Bären 13, 14 absenken oder anheben.

Somit kann das Druckjoch 12 und damit auch der Höhenstempel 10 bezüglich der Form 5 und damit bezüglich des zu pressenden Fleischstückes F verstellt werden, so dass vom Antrieb 3 den Bären 13, 14 immer und in jedem Fall derselbe Hub erteilt wird.

**Patentansprüche**

1. Presse zum Formen von Fleischwaren mit einem Formhohlraum (5) mit wenigstens in diesen einfahrbarem Höhenstempel (10), der an einer mit wenigstens einem Bär (13, 14), verbundenen Druckplatte (12), befestigt ist, dadurch gekennzeichnet, dass die Druckplatte (12) gegenüber dem Bären (13, 14) höhenverstellbar gehaltert ist.

2. Presse nach Patentanspruch 1, dadurch gekennzeichnet, dass zur höhenverstellbaren Halterung der Bär (13, 14) mit einem Spindelgewinde (46, 47) versehen ist, und dass an der Druckplatte (12) wenigstens eine entsprechende Spindelmutter (40, 41) drehbar befestigt ist.

3. Presse nach Patentanspruch 2, dadurch gekennzeichnet, dass die Spindelmutter (40, 41) als Schneckenrad ausgebildet ist, und dass eine Welle (44) wenigstens mit einer Zylinderschnecke (42, 43) zum Eingriff mit dem Schneckenrad zum Verstellen ausgerüstet ist.

**Revendications**

1. Presse pour la formation de produits à base de viande, avec un espace creux de moule (5), avec au moins un poinçon supérieur (10) pouvant pénétrer dans ce dernier et fixé à un plateau de pression (12) relié à au moins un bélier (13, 14), caractérisée en ce que le plateau de pression (12) est supporté de manière variable en hauteur par rapport au bélier (13, 14).

2. Presse suivant la revendication 1, caracté-

EP 0 226 540 B1

risée en ce que, pour le support variable en hauteur, le bélier (13, 14) est muni d'une tige filetée (46, 47) et qu'au moins un écrou à tige correspondant (40, 41) est fixé de manière rotative au plateau de pression (12).

3. Presse suivant la revendication 2, caractérisée en ce que l'écrou à tige (40, 41) est construit comme roue à vis tangente et qu'un arbre (44) est équipé au moins d'une vis sans fin cylindrique (42, 43) pour l'engrenage avec la roue à vis tangente pour le déplacement.

**Claims**

1. A press for moulding meat products, having a hollow mould chamber (5) having a vertical plunger (10) which can be inserted at least therein, and which is fastened to a pressure plate (12) connected to at least one ram (13, 14), characterised in that the pressure plate (12) is held such that its height is adjustable with respect to the ram (13, 14).

2. A press as claimed in claim 1, characterised in that, to hold it such that its height can be adjusted, the ram (13, 14) is provided with a spindle thread (46, 47) and that at least one corresponding spindle nut (40, 41) is rotatably fastened to the pressure plate (12).

3. A press as claimed in claim 2, characterised in that the spindle nut (40, 41) is in the form of a worm wheel and that a shaft (44) is provided at least with a cylindrical worm (42, 43) for engagement with the worm wheel for adjustment.

Fig.1

Fig.2